# FASCICULE DE BREVET EUROPEEN

(11) **EP 1 955 929 B1**
(45) Date de publication et mention de la délivrance du brevet: **23.12.2009**
(21) Numéro de dépôt: 08356015.1
(22) Date de dépôt: 29.01.2008
(51) Int. Cl.: B62D 5/04

(54) **Ensemble moteur et engrenage réducteur**
Motoreinheit und Reduziergetriebe
Motor assembly and reduction gear

(30) Priorité: 08.02.2007 FR 0700896
(43) Date de publication de la demande: 13.08.2008
(73) Titulaire: Jtekt Europe, 69540 Irigny (FR)
(72) Inventeur: Sarzier, Anthony, 69780 Mions (FR); Chauvrat, Philippe, 01480 Villeneuve (FR); Darblade, Eric, 69340 Francheville (FR); Monnet, Pierre, 69130 Ecully (FR)
(74) Mandataire: Bratel, Gérard

(56) Documents cités:
- EP-A- 0 943 842
- EP-A- 1 321 350

## Description

La présente invention concerne un ensemble combinant un moteur, notamment un moteur électrique, et un engrenage réducteur associé à ce moteur. Plus particulièrement, cette invention se rapporte à un tel ensemble moteur et engrenage réducteur utilisé dans un système de direction assistée électrique de véhicule automobile, l'engrenage réducteur étant, dans cette utilisation, intercalé entre le moteur électrique d'assistance et un élément mobile du système de direction.

Dans un véhicule automobile à direction assistée électrique, un moteur électrique d'assistance est relié, par un mécanisme de transmission réducteur de vitesse donc multiplicateur de couple, à un élément mobile du système de direction qui relie le volant de conduite aux roues directrices du véhicule. Le mécanisme réducteur est notamment réalisé sous la forme d'un engrenage réducteur à vis sans fin et roue tangente, la vis sans fin étant coaxiale à l'arbre du moteur électrique d'assistance et étant entraînée en rotation par cet arbre, tandis que la roue tangente est liée en rotation à la colonne de direction ou à un autre élément mobile de la direction. L'engrenage réducteur, ainsi associé au moteur électrique d'assistance, permet d'exploiter toute la puissance de ce moteur sur la plage de vitesse demandée.

L'engrenage réducteur à vis sans fin et roue tangente est soumis à des jeux ou à des contraintes, qui provoquent dans la direction du véhicule des bruits et vibrations, ou des frottements. Pour éviter tout problème de bruit ou de frottement sur une large plage de température, l'engrenage réducteur est habituellement muni d'un dispositif de rattrapage de jeu, visant à maintenir en contact la vis sans fin et la roue tangente, ceci en toutes conditions.

Une solution actuellement utilisée à cet effet consiste à exercer un effort sur l'extrémité de l'arbre d'entrée du réducteur, c'est-à-dire l'arbre de la vis sans fin, pour appliquer cette vis sans fin sur la denture de la roue tangente, qui constitue l'élément de sortie du réducteur. L'arbre d'entrée du réducteur est monté tournant dans des roulements situés de part et d'autre de la vis sans fin, cet arbre d'entrée étant une pièce indépendante de l'arbre du moteur électrique d'assistance. Les deux arbres, sensiblement coaxiaux, sont liés par un dispositif d'accouplement élastique, par exemple du genre manchon, qui permet un désalignement des deux arbres et, par conséquent, un déplacement plus ou moins important de la vis sans fin vers la roue tangente, alors que l'arbre du moteur conserve une orientation invariable.

A titre d'illustration de cet état de la technique, il est fait ici référence, par exemple, aux documents de brevets FR 2833556 (et son équivalent EP 1321350), FR 2842153 (et son équivalent WO 2004/007252) et FR 2844497.

Dans les réalisations actuelles, il convient donc de prévoir deux arbres distincts, chacun étant maintenu par deux roulements, dont un roulement pivotant pour l'arbre d'entrée de l'engrenage réducteur, ce qui rend nécessaire au total quatre roulements auxquels s'ajoute le dispositif d'accouplement entre les deux arbres, ainsi que le dispositif de rattrapage de jeu de l'engrenage réducteur. Ces réalisations sont donc relativement complexes et coûteuses, et elles sont encombrantes. De plus, du point de vue mécanique, les réalisations actuelles à quatre roulements pour une ligne d'arbres sont de nature "hyperstatique", ce qui crée des couples résistants additionnels dans le fonctionnement de l'ensemble.

La présente invention vise à éliminer ces inconvénients. Elle a donc pour but de fournir un ensemble moteur et engrenage réducteur qui soit plus simple et plus économique que les réalisations actuelles, et qui procure aussi un certain gain de place, tant en assurant la fonction de rattrapage de jeu dans la partie réducteur.

A cet effet, l'invention a pour objet un ensemble moteur et engrenage réducteur, plus particulièrement utilisable dans un système de direction assistée électrique de véhicule automobile, avec un moteur notamment électrique dont l'arbre est aligné avec l'arbre d'entrée de l'engrenage réducteur qui porte un premier élément d'engrenage, tel que vis sans fin, venant en prise avec un autre élément d'engrenage tel que roue tangente, le moteur possédant un carter et l'engrenage réducteur possédant également un carter, cet ensemble étant caractérisé par le fait que, d'une part, l'arbre du moteur et l'arbre d'entrée de l'engrenage réducteur sont réunis de manière à former un arbre unique monté tournant dans des roulements, et d'autre part, le carter de l'engrenage réducteur est lié au carter du moteur par au moins un dispositif de fixation élastique autorisant un léger pivotement relatif du carter du moteur par rapport au carter de l'engrenage réducteur autour d'un axe sensiblement perpendiculaire audit arbre unique et aussi orthogonal à la ligne d'action d'u dispositif de rattrapage de jeu de l'engrenage réducteur.

Aussi, l'idée inventive consiste à rigidifier la ligne d'arbres, constituée par l'arbre du moteur et par l'arbre d'entrée de l'engrenage réducteur, tout en conservant la fonction de rattrapage de jeu dans l'engrenage réducteur, grâce à une fixation "souple" du carter de l'engrenage réducteur sur le carter du moteur. On conserve ainsi les degrés de liberté traditionnellement assurés par le roulement pivotant et par l'accouplement élastique entre ces arbres, tout en supprimant ces derniers éléments d'où une simplification et une économie, ainsi qu'un gain de place dans la direction longitudinale de l'arbre. On notera aussi que la configuration selon l'invention est de type "isostatique", permettant de réduire des couples résistants habituellement rencontrés.

L'arbre du moteur et l'arbre d'entrée de l'engrenage réducteur résultent avantageusement d'un arbre rigide unique et commun, ce qui apporte une simplification et économie supplémentaires par la réalisation de ces deux arbres sous la forme d'une pièce unique.

Toutefois, dans une variante fonctionnellement équivalente, l'arbre du moteur et l'arbre d'entrée de l'engrenage réducteur sont deux arbres constructivement distincts, rendus rigidement solidaires l'un de l'autre par leur assemblage.

L'arbre unique, ainsi prévu, est de préférence monté tournant dans trois roulements, comprenant : un premier roulement à l'extrémité de l'arbre située dans le moteur et éloignée de l'engrenage réducteur ; un deuxième roulement en un point intermédiaire de la longueur de l'arbre, plus particulièrement à l'extrémité du moteur à laquelle se raccorde l'engrenage réducteur ; et un troisième roulement à l'autre extrémité de l'arbre située dans l'engrenage réducteur et éloignée du moteur. Tous ces roulements sont des roulements simples, l'invention rendant inutile le roulement pivotant habituellement prévu.

Dans une forme de réalisation préférée de l'invention, l'ensemble moteur et engrenage réducteur comprend, pour la liaison du carter de l'engrenage réducteur avec le carter du moteur, deux dispositifs de fixation élastiques disposés symétriquement sur une ligne diamétrale sensiblement orthogonale à la ligne d'action du dispositif de rattrapage de jeu de l'engrenage réducteur ; en particulier, dans le cas d'un engrenage réducteur à vis sans fin et roue tangente, les deux dispositifs de fixation élastiques se situent sur une ligne diamétrale perpendiculaire au plan contenant l'axe de la vis sans fin et contenant aussi la roue tangente.

Selon un mode d'exécution avantageux, chaque dispositif de fixation élastique comprend une vis de fixation qui traverse deux brides ou oreilles correspondantes, formées aux extrémités respectives rapprochées du carter de l'engrenage réducteur et du carter du moteur, la vis de fixation étant directement vissée dans une bride ou oreille et traversant l'autre bride ou oreille avec interposition d'un élément élastiquement déformable, par exemple un élément du genre bague.

De préférence, l'élément élastiquement déformable, du genre bague, entoure un insert rigide, notamment métallique, qui est traversé par la vis de fixation. L'insert rigide, notamment métallique, possède avantageusement la forme d'une douille pourvue d'un épaulement annulaire sur lequel prend appui la tête de la vis de fixation. Grâce à cette configuration, et en particulier à l'insert métallique, un serrage axial des deux carters l'un contre l'autre est rendu possible, lors du montage de l'ensemble, tout en autorisant un léger débattement angulaire d'un carter relativement à l'autre.

L'invention sera mieux comprise à l'aide de la description qui suit, en référence au dessin schématique annexé représentant, à titre d'exemple, une forme d'exécution de cet ensemble moteur et engrenage réducteur, appliqué à une direction assistée électrique de véhicule automobile :
Figure 1 est une vue d'ensemble, très schématique, d'un système de direction assistée électrique, équipé d'un ensemble moteur et engrenage réducteur réalisable conformément à la présente invention :
Figure 2 est une vue de côté, avec coupe partielle, d'un ensemble moteur et engrenage réducteur selon l'état de la technique ;
Figure 3 est une vue de dessus, avec coupe partielle, de l'ensemble selon l'état de la technique représenté sur la figure 2 ;
Figure 4 est une vue de côté avec coupe partielle, similaire à la figure 2, d'un ensemble moteur et engrenage réducteur conforme à la présente invention ;
Figure 5 est une vue de dessus, avec coupe partielle, de l'ensemble conforme à l'invention représenté sur la figure 4 ;
Figure 6 représente, en coupe et à échelle agrandie, un détail de la figure 5.

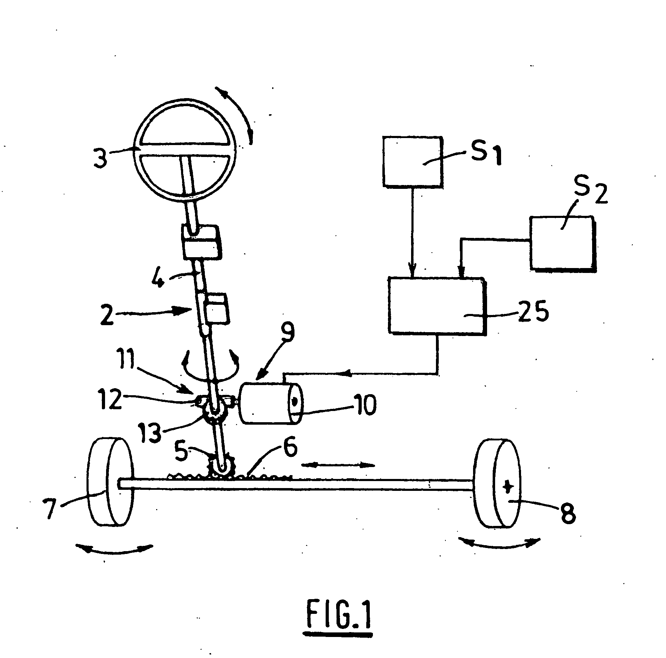

La figure 1 montre les éléments habituels d'une direction 2 de véhicule automobile, en particulier un volant de conduite 3 lié à une extrémité d'une colonne de direction 4, dont l'extrémité opposée porte un pignon de direction 5 qui vient en prise avec une crémaillère 6. Les deux extrémités de la crémaillère 6 sont respectivement liées, par l'intermédiaire de biellettes (non représentées), à deux roues directrices 7 et 8 du véhicule automobile concerné.

S'agissant d'une direction 2 avec assistance électrique, il est encore prévu un ensemble 9 composé d'un moteur électrique d'assistance 10 et d'un engrenage réducteur 11, intercalé entre le moteur électrique 10 et la colonne de direction 4. L'engrenage réducteur 11 est un mécanisme à vis sans fin 12 et roue tangente 13, qui transmet le mouvement rotatif du moteur électrique 10 à la colonne de direction 4, en ayant un rôle de réducteur de vitesse et de multiplicateur de couple.

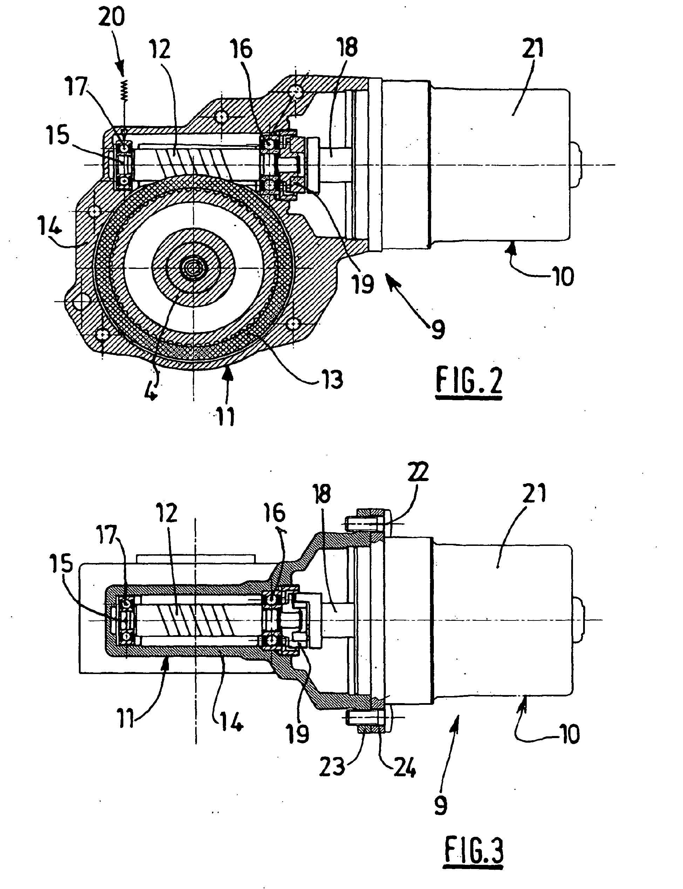

Le mécanisme à vis sans fin 12 et roue tangente 13 est logé dans un carter de réducteur 14, supposé retiré sur le figure 1 mais bien visible sur les figures 2 et suivantes.

En se référent plus particulièrement aux figures 2 et 3, qui représentent un ensemble 9 selon l'état de la technique, la vis sans fin 12 est habituellement solidaire d'un arbre 15, constituant l'arbre d'entrée de l'engrenage réducteur 11, qui est monté tournant dans deux roulements 16 et 17 situés de part et d'autre de cette vis sans fin 12, le roulement 16 le plus proche du moteur électrique 10 étant un roulement pivotant.

L'arbre 15 de la vis sans fin 12 est sensiblement coaxial à l'arbre 18 du moteur électrique 10, et ces deux arbres 15 et 18 sont liés en rotation par l'intermédiaire d'un accouplement élastique 19.

L'engrenage réducteur 11 est muni d'un dispositif de rattrapage de jeu, symbolisé en 20, qui applique un effort à l'extrémité de l'arbre d'entrée 15 la plus éloignée du moteur électrique 10, notamment en regard du roulement 17, pour maintenir la vis sans fin 12 en contact avec la denture de la roue tangente 13.

Comme le montre la figure 3, le carter 14 de l'engrenage réducteur 11 est fixé, sans possibilité de mouvement, au carter 21 du moteur électrique d'assistance 10, au moyen de vis 22 qui traversent des oreilles correspondantes 23 et 24 formées aux extrémités respectives rapprochées des deux carters 14 et 21.

Enfin, d'une manière généralement connue et ici non représentée, l'arbre 18 du moteur électrique 10, arbre qui porte le rotor de ce moteur électrique, est monté tournant dans deux roulements opposés, appartenant audit moteur électrique 10. Ce dernier est un moteur à deux sens de rotation, piloté par un calculateur électronique 25 qui reçoit divers signaux extérieurs tels que ceux indiqués S1 et S2 (voir figure1).

Comme il résulte de la description précédente, l'ensemble 9 actuel comporte deux arbres distincts 14 et 18, un accouplement 19 liant ces deux arbres, un nombre total de quatre roulements et le dispositif de rattrapage de jeu 20.

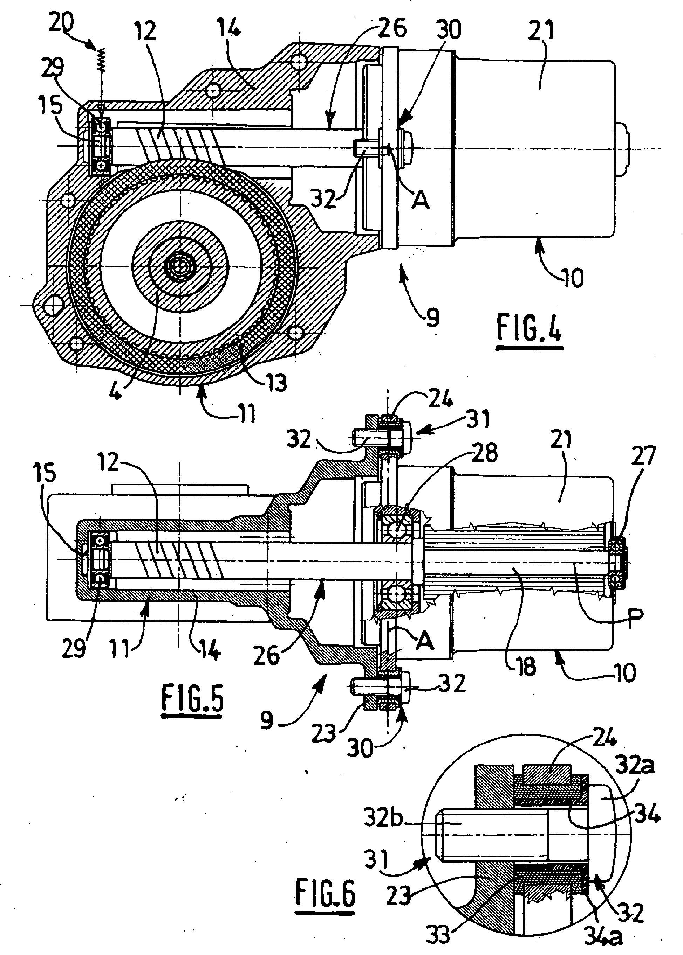

Une telle complexité est évitée par un ensemble 9 conforme à la présente invention, lequel est représenté sur les figures 4 à 6 auxquelles il est fait référence ci-après.

Sur ces figures 4 à 6, les éléments correspondant à ceux des figures précédentes sont désignés par les mêmes repères numériques. L'ensemble 9 comprend ainsi un moteur électrique d'assistance 10, dont le carter est indiqué en 21, et un engrenage réducteur 11 comprenant une vis sans fin 12 en prise avec une roue tangente 13, l'engrenage réducteur 11 possédant un carter 14.

Comme le montre plus particulièrement la figure 5, l'arbre 18 du moteur électrique 10 et l'arbre d'entrée 15 de l'engrenage réducteur 11 sont réunis pour ne former qu' un seul et même arbre rigide 26 qui s'étend sur pratiquement toute la longueur de l'ensemble 9. L'arbre unique 26 est monté tournant dans seulement trois roulements, à savoir :
- un premier roulement 27 situé à l'extrémité de l'arbre 26 située dans le moteur électrique 10 et éloignée de l'engrenage réducteur 11;
- un deuxième roulement 28 situé en un point intermédiaire de la longueur de l'arbre 26, à l'extrémité du moteur électrique 10 à laquelle se raccorde l'engrenage réducteur 11 ;
- un troisième roulement 29 situé à l'autre extrémité de l'arbre 26, c'est-à-dire son extrémité située dans l'engrenage réducteur 11 et éloignée du moteur électrique 10.

Un dispositif connu de rattrapage de jeu 20 est associé au troisième roulement 29.

La liaison entre le carter 14 de l'engrenage réducteur 11 et le carter 21 du moteur électrique 10 est réalisée au moyen de deux dispositifs de fixation élastiques 30 et 31, disposés symétriquement dans un plan diamétral perpendiculaire au plan P du déplacement attendu de la vis sans fin 12, c'est-à-dire le plan de la coupe de la figure 4, contenant l'axe de la vis sans fin 12 et aussi la roue tangente 13.

Comme le montre plus particulièrement la vue de détail de la figure 6, chaque dispositif de fixation élastique 30 ou 31 comprend une vis de fixation 32, qui traverse des oreilles correspondantes 23 et 24 formées aux extrémités respectives des deux carters 14 et 21. La tête 32a de la vis de fixation 32 se situe du côté du moteur électrique 10, et le filetage 32b de cette vis 32 se situe du côté de l'engrenage réducteur 11.

L'oreille 24 du carter 21 du moteur électrique 10 présente une ouverture circulaire, dans laquelle est introduite une bague en élastomère 33 entourant un insert métallique central 34, en forme de douille avec un épaulement annulaire 34a. La tête 32a de la vis de fixation 32 prend appui sur l'épaulement annulaire 34a de l'insert métallique 34, tandis que le filetage 32b de cette vis 32 traverse l'insert 34 et est vissé dans un taraudage de l'oreille 23 correspondante du carter 14 de l'engrenage réducteur 11. Lorsque la vis de fixation 32 est complètement serrée, l'insert métallique 34 prend appui sur l'oreille 23 du carter 14, du côté opposé à l'épaulement 34a, pour assurer le serrage axial des deux carters 14 et 21 (comme montré sur la figure 6).

Grâce aux deux dispositifs de fixation élastiques 30 et 31, le carter 21 du moteur électrique 10 est monté avec un degré de liberté relativement au carter 14 de l'engrenage réducteur 11. Plus particulièrement, le carter 21 du moteur électrique 10 peut légèrement pivoter, autour d'un axe A perpendiculaire au plan P de la coupe de la figure 4, l'axe A étant aussi perpendiculaire à la ligne d'action du dispositif de rattrapage de jeu 20, situé en regard du troisième roulement 29.

Le jeu relatif entre les carters respectifs 14 et 21 de l'engrenage réducteur 11 et du moteur électrique 10 permet le fonctionnement du dispositif de rattrapage de jeu 20 de l'engrenage réducteur 11, sans nécessité du roulement pivotant 16 et de l'accouplement élastique 19 habituellement prévus.

L'on ne s'éloignerait pas du cadre de l'invention, telle que définie dans les revendications annexées :
- par des modifications constructives de détail, par exemple en inversant le sens de montage des vis de fixation liant les deux carters, ou en utilisant des dispositifs de fixation élastiques d'un autre type ;
- en ayant recours à toutes solutions équivalentes, par exemple en remplaçant l'arbre unique 26, commun au moteur et à l'engrenage réducteur, par deux arbres constructivement distincts mais rendus rigidement solidaires l'un de l'autre par leur assemblage ;
- en appliquant l'invention à un ensemble dans lequel l'engrenage réducteur n'est pas du type à vis sans fin et roue tangente, le problème du rattrapage de jeu se posant aussi pour des engrenages réducteurs d'un autre type ;
- en destinant l'invention à des ensembles moteur et engrenage réducteur n'appartenant pas à des systèmes de direction assistée électrique de véhicule automobile, mais utilisés à d'autres fins.

## Revendications

1. Ensemble moteur et engrenage réducteur, plus particulièrement utilisable dans un système de direction assistée électrique de véhicule automobile, avec un moteur (10) notamment électrique dont l'arbre (18) est aligné avec l'arbre d'entrée (15) de l'engrenage réducteur (11) qui porte un premier élément d'engrenage, tel qu'une vis sans fin (12), venant en prise avec un autre élément d'engrenage tel que roue tangente (13), le moteur (10) possédant un carter (21) et l'engrenage réducteur (11) possédant également un carter (14), **caractérisé en ce que**, d'une part, l'arbre (18) du moteur (10) et l'arbre d'entrée (15) de l'engrenage réducteur (11) sont réunis de manière à former un arbre unique (26) monté tournant dans des roulements (27, 28, 29), et d'autre part, le carter (14) de l'engrenage réducteur (11) est lié au carter (21) du moteur (10) par au moins un dispositif de fixation élastique (30, 31) autorisant un léger pivotement relatif du carter (21) du moteur (10) par rapport au carter (14) de l'engrenage réducteur (11) autour d'un axe (A) sensiblement perpendiculaire audit arbre unique (26) et aussi orthogonal à la ligne d'action d'un dispositif de rattrapage de jeu (20) de l'engrenage réducteur (11).

2. Ensemble moteur et engrenage réducteur selon la revendication 1, **caractérisé en ce que** l'arbre (18) du moteur (10) et l'arbre d'entrée (15) de l'engrenage réducteur (11) résultent d'un arbre rigide unique et commun (26).

3. Ensemble moteur et engrenage réducteur selon la revendication 1, **caractérisé en ce que** l'arbre (18) du moteur (10) et l'arbre d'entrée (15) de l'engrenage réducteur (11) sont deux arbres constructivement distincts, rendus rigidement solidaires l'un de l'autre par leur assemblage.

4. Ensemble moteur et engrenage réducteur selon l'une des revendications 1 à 3, **caractérisé en ce que** l'arbre unique (26) est monté tournant dans trois roulements, comprenant: un premier roulement (27) à l'extrémité de l'arbre (26) située dans le moteur (10) et éloignée de l'engrenage réducteur (11) ; un deuxième roulement (28) en un point intermédiaire de la longueur de l'arbre (26), plus particulièrement à l'extrémité du moteur (10) à laquelle se raccorde l'engrenage réducteur (11) ; et un troisième roulement (28) à l'autre extrémité de l'arbre (26) située dans l'engrenage réducteur (11) et éloignée du moteur (10).

5. Ensemble moteur et engrenage réducteur selon l'une des revendications 1 à 4, **caractérisé en ce qu'**il comprend, pour la liaison du carter (14) de l'engrenage réducteur (11) avec le carter (21) du moteur (10), deux dispositifs de fixation élastiques (30, 31) disposés symétriquement sur une ligne diamétrale (A) sensiblement orthogonale à la ligne d'action du dispositif de rattrapage de jeu (20) de l'engrenage réducteur (11), en particulier une ligne diamétrale (A) perpendiculaire au plan (P) contenant l'axe de la vis sans fin (12) et contenant aussi la roue tangente (13).

6. Ensemble moteur et engrenage réducteur selon la revendication 5, **caractérisé en ce que** chaque dispositif de fixation élastique (30, 31) comprend une vis de fixation (32) qui traverse deux brides ou oreilles correspondantes (23, 24), formées aux extrémités respectives rapprochées du carter (14) de l'engrenage réducteur (11) et du carter (21) du moteur (10), la vis de fixation (32) étant directement vissée dans une bride ou oreille (23) et traversant l'autre bride ou oreille (24) avec interposition d'un élément élastiquement déformable (33).

7. Ensemble moteur et engrenage réducteur selon la revendication 6, **caractérisé en ce que** l'élément élastiquement déformable (33), du genre bague, entoure un insert rigide, notamment métallique (34), qui est traversé par la vis de fixation (32).

8. Ensemble moteur et engrenage réducteur selon la revendication 7, **caractérisé en ce que** l'insert rigide, notamment métallique (34), possède la forme d'une douille pourvue d'un épaulement annulaire (34a) sur lequel prend appui la tête (32a) de la vis de fixation (32).

## Claims

1. Motor and reduction gear assembly, more particularly one that can be used in a motor vehicle electric power assisted steering system, with a motor (10), particularly an electric motor, the shaft (18) of which is aligned with the input shaft (15) of the reduction gearing (11) which carries a first gear element, such as a worm (12) meshing with another gear element such as a worm wheel (13), the motor (10) having a casing (21) and the reduction gearing (11) also having a casing (14), **characterized in that**, on the one hand, the shaft (18) of the motor (10) and the input shaft (15) of the reduction gearing (11) are connected in such a way as to form a single shaft (26) mounted such that it can turn in rolling bearings (27, 28, 29) and, on the other hand, the casing (14) of the reduction gearing (11) is connected to the casing (21) of the motor (10) by at least one elastic attachment device (30, 31) that allows a small degree of relative pivoting of the casing (21) of the motor (10) with respect to the casing (14) of the reduction gearing (11) about an axis (A) substantially perpendicular to the said single shaft (26) and also orthogonal to the line of action of an anti-backlash device (20) of the reduction gearing (11).

2. Motor and reduction gear assembly according to Claim 1, **characterized in that** the shaft (18) of the motor (10) and the input shaft (15) of the reduction gearing (11) are the result of a single and common rigid shaft (26).

3. Motor and reduction gear assembly according to Claim 1, **characterized in that** the shaft (18) of the motor (10) and the input shaft (15) of the reduction gearing (11) are two structurally separate shafts rigidly joined together by assembling them.

4. Motor and reduction gear assembly according to one of Claims 1 to 3, **characterized in that** the single shaft (26) is mounted such that it can turn in three rolling bearings, comprising: a first rolling bearing (27) at that end of the shaft (26) that is situated in the motor (10) and distant from the reduction gearing (11); a second rolling bearing (28) at an intermediate point along the length of the shaft (26), more particularly at that end of the motor (10) to which the reduction gearing (11) is connected; and a third rolling bearing (28) at the other end of the shaft (26), the end situated in the reduction gearing (11) and distant from the motor (10).

5. Motor and reduction gear assembly according to one of Claims 1 to 4, **characterized in that** it comprises, for connecting the casing (14) of the reduction gearing (11) to the casing (21) of the motor (10), two elastic attachment devices (30, 31) positioned symmetrically on a diametral line (A) substantially orthogonal to the line of action of the anti-backlash device (20) of the reduction gearing (11), particularly a diametral line (A) perpendicular to the plane (P) containing the axis of the worm (12) and also containing the worm wheel (13).

6. Motor and reduction gear assembly according to Claim 5, **characterized in that** each elastic attachment device (30, 31) comprises an attachment screw (32) that passes through two corresponding flanges or lugs (23, 24) formed at the close-together respective ends of the casing (14) of the reduction gearing (11) and of the casing (21) of the motor (10), the attachment screw (32) being screwed directly into one flange or lug (23) and passing through the other flange or lug (24) with the interposition of an elastically deformable element (33).

7. Motor and reduction gear assembly according to Claim 6, **characterized in that** the elastically deformable element (33), of the ring type, surrounds a rigid insert, particularly a metal one (34), through which the attachment screw (32) passes.

8. Motor and reduction gear assembly according to Claim 7, **characterized in that** the rigid insert, which is particularly a metal one (34), has the form of a sleeve provided with an annular shoulder (34a) against which the head (32a) of the attachment screw (32) bears.

## Patentansprüche

1. Motoreinheit und Reduktionsgetriebe, die insbesondere in einem elektrischen Servolenkungssystem eines Kraftfahrzeugs verwendbar sind, mit einem insbesondere elektrischen Motor (10), dessen Welle (18) mit der Antriebswelle (15) des Reduktionsgetriebes (11) fluchtend ausgerichtet ist, die ein erstes Getriebeelement, wie eine Endlosschraube (12), trägt, das mit einem anderen Getriebeelement, wie einem Schneckenrad (13), in Eingriff kommt, wobei der Motor (10) ein Gehäuse (21) besitzt und das Reduktionsgetriebe (11) ebenfalls ein Gehäuse (14) besitzt, **dadurch gekennzeichnet, dass** einerseits die Welle (18) des Motors (10) und die Antriebswelle (15) des Reduktionsgetriebes (11) so vereint sind, dass sie eine einzige Welle (26) bilden, die in Wälzlagern (27, 28, 29) drehend montiert ist, und andererseits das Gehäuse (14) des Reduktionsgetriebes (11) mit dem Gehäuse (21) des Motors (10) durch mindestens eine elastische Befestigungsvorrichtung (30, 31) verbunden ist, die ein leichtes relatives Schwenken des Gehäuses (21) des Motors (10) bezüglich des Gehäuses (14) des Reduktionsgetriebes (11) um eine Achse (A) im Wesentlichen lotrecht zur einzigen Welle (26) und auch orthogonal zur Wirkungslinie einer Spielausgleichsvorrichtung (20) des Reduktionsgetriebes (11) erlaubt.

2. Motoreinheit und Reduktionsgetriebe nach Anspruch 1, **dadurch gekennzeichnet, dass** die Welle (18) des Motors (10) und die Antriebswelle (15) des Reduktionsgetriebes (11) aus einer einzigen steifen und gemeinsamen Welle (26) resultieren.

3. Motoreinheit und Reduktionsgetriebe nach Anspruch 1, **dadurch gekennzeichnet, dass** die Welle (18) des Motors (10) und die Antriebswelle (15) des Reduktionsgetriebes (11) zwei konstruktiv unterschiedliche Wellen sind, die durch ihren Zusammenbau steif und fest miteinander verbunden werden.

4. Motoreinheit und Reduktionsgetriebe nach einem der Ansprüche 1 bis 3, **dadurch gekennzeichnet, dass** die einzige Welle (26) in drei Wälzlagern drehend montiert ist, die enthalten: ein erstes Wälzlager (27) an dem Ende der Welle (26), das sich im Motor (10) befindet und vom Reduktionsgetriebe (11) entfernt ist; ein zweites Wälzlager (28) an einem Zwischenpunkt der Länge der Welle (26), genauer an dem Ende des Motors (10), an dem das Reduktionsgetriebe (11) anschließt; und ein drittes Wälzlager (28) am anderen Ende der Welle (26), das sich im Reduktionsgetriebe (11) und entfernt vom Motor (10) befindet.

5. Motoreinheit und Reduktionsgetriebe nach einem der Ansprüche 1 bis 4, **dadurch gekennzeichnet, dass** sie für die Verbindung des Gehäuses (14) des Reduktionsgetriebes (11) mit dem Gehäuse (21) des Motors (10) zwei elastische Befestigungsvorrichtungen (30, 31) enthält, die symmetrisch auf einer diametralen Linie (A) im Wesentlichen orthogonal zur Wirkungslinie der Spielausgleichvorrichtung (20) des Reduktionsgetriebes (11), insbesondere einer diametralen Linie (A) lotrecht zu der Ebene (P) angeordnet sind, die die Achse der Endlosschraube (12) und auch das Schneckenrad (13) enthält.

6. Motoreinheit und Reduktionsgetriebe nach Anspruch 5, **dadurch gekennzeichnet, dass** jede elastische Befestigungsvorrichtung (30, 31) eine Befestigungsschraube (32) enthält, die zwei entsprechende Flansche oder Lappen (23, 24) durchquert, die an den jeweiligen angenäherten Enden des Gehäuses (14) des Reduktionsgetriebes (11) und des Gehäuses (21) des Motors (10) geformt sind, wobei die Befestigungsschraube (32) direkt in einen Flansch oder Lappen (23) geschraubt wird und den anderen Flansch oder Lappen (24) mit Zwischenfügung eines elastisch verformbaren Elements (33) durchquert.

7. Motoreinheit und Reduktionsgetriebe nach Anspruch 6, **dadurch gekennzeichnet, dass** das elastisch verformbare Element (33) von der Art Ring einen steifen, insbesondere metallischen Einsatz (34) umgibt, der von der Befestigungsschraube (32) durchquert wird.

8. Motoreinheit und Reduktionsgetriebe nach Anspruch 7, **dadurch gekennzeichnet, dass** der steife, insbesondere metallische Einsatz (34) die Form einer Hülse hat, die mit einer ringförmigen Schulter (34a) versehen ist, auf der der Kopf (32a) der Befestigungsschraube (32) aufliegt.
